# EUROPÄISCHE PATENTSCHRIFT

(11) **EP 1 233 690 B1**
(45) Veröffentlichungstag und Bekanntmachung des Hinweises auf die Patenterteilung: **17.05.2006**
(21) Anmeldenummer: 01995637.4
(22) Anmeldetag: 16.11.2001
(51) Int. Cl.: A47C 20/04, H02K 7/06, H02K 7/116

(54) **ELEKTROMOTORISCHER STELLANTRIEB**
ELECTROMOTIVE ACTUATOR
MECANISME DE COMMANDE A MOTEUR ELECTRIQUE

(30) Priorität: 17.11.2000 DE 20019630 U
(43) Veröffentlichungstag der Anmeldung: 28.08.2002
(73) Patentinhaber: Dewert Antriebs- und Systemtechnik GmbH & Co. KG, 32278 Kirchlengern (DE); LA-Z-BOY Incorporated, Monroe, Michigan 48162-3990 (US)
(72) Erfinder: ROITHER, Andreas, 32130 Enger (DE); BOKÄMPER, Ralf, 32312 Lübbecke (DE); BROWN, Tom, Lancashire, PR5 3JW (GB)
(74) Vertreter: Specht, Peter
(86) Internationale Anmeldenummer: PCT/EP2001/013249
(87) Internationale Veröffentlichungsnummer: WO 2002/039852

(56) Entgegenhaltungen:
- DE-A- 19 613 814
- DE-U- 9 318 082
- US-A- 5 960 670

## Beschreibung

Die Erfindung betrifft eine elektromotorische Möbelantriebsanordnung mit einem Gehäuse, welches aus zwei Gehäusehälften oder aus zwei Gehäuseschalen besteht, mit einem Antriebsmotor und mit einem Antriebszug mit einer Profilbohrung für ein drehfähiges Eingangsglied einer Verstelleinrichtung.

Eine elektromotorische Möbelantriebsanordnung der in Rede stehenden Art ist aus der DE 196 13 814 A1 bekannt. Bei dieser Möbelantriebsanordnung handelt es sich um einen einstufigen Antrieb. Der Antriebsmotor treibt eine Schnecke an, die mit einem Schneckenrad in Eingriff steht. Dieses Schneckenrad ist mit einer Bohrung versehen, in die eine Spindel fest eingesetzt ist und demzufolge bei eingeschaltetem Antriebsmotor mit gegenüber dem Rotor des Antriebsmotors reduzierte Drehzahl angetrieben wird. Auf diese Spindel ist eine gegen Drehung gesicherte Spindelmutter aufgesetzt, die sich in Längsrichtung verschiebt. In nicht näher beschriebener Weise drückt jedoch bei derartigen Möbelantriebsanordnungen die freie Stirnfläche der Spindelmutter gegen einen Anlenkhebel, der drehfest mit dem zu verstellenden Bauteil eines Möbels verbunden ist.

Aus der DE 93 18 082 U1 ist eine elektromotorische Möbelantriebsanordnung bekannt, die für ein in ein Bettgestell einlegbares Lattenrost ausgelegt ist. Diese elektromotorische Möbelantriebsanordnung ist mit einem im wesentlichen geschlossenen Getriebegehäuse ausgestattet, an das ein Antriebsmotor angeflanscht ist. Der Antriebsmotor treibt eine Schnecke an, die mit einem Schneckenrad in Eingriff steht. Das Schneckenrad ist mit einer Innengewindebohrung versehen und trägt eine in ihrer Längsrichtung verfahrbare Stellspindel. Auf die Stellspindel ist in einem Endbereich ein Schieber aufgesetzt, der mit einem Verstellhebel zusammenwirkt. Der Verstellhebel kann verschiedenartig ausgebildet sein, hat jedoch eine quer zur Stellspindel verlaufende, eckige Durchbrechung in Form einer Durchstecköffnung.

In diese Durchstecköffnung ist ein querschnittsgleicher Einsteckbolzen schließend eingesetzt, der gegenüber den beiden parallel zur Stellspindel verlaufenden Gehäusewandungen vorsteht, so dass auf die vorstehenden Endbereiche des Einsteckbolzens Bauteile mit einer querschnittsgleichen Öffnung einer Möbelverstelleinrichtung aufgesetzt werden können.

Insbesondere bei der letztgenannten Ausführung werden minimale Abmessungen für die Möbelantriebsanordnung erreicht, so dass sie auch insbesondere bei Sitzmöbeln mit äußerst geringen Einbauräumen angewendet werden können.

Die beiden vorbekannten Möbelantriebsanordnungen sind jedoch mit dem Nachteil behaftet, dass der Schwenkwinkel des damit fest verbundenen Bauteils einer Möbelverstelleinrichtung relativ gering ist und im Normalfall unter 90° liegt. Insbesondere bei Sitzmöbeln wird jedoch ein größerer Schwenkwinkel gefordert.

Der Erfindung liegt die Aufgabe zugrunde, eine elektromotorische Möbelantriebsanordnung der eingangs näher beschriebenen Art so zu gestalten, dass bei geringstmöglichen Abmessungen ein größtmöglicher Schwenk- bzw. Drehwinkel für das mit dem Abtriebsglied der Möbelantriebsanordnung zusammenwirkenden Bauteils erreicht wird.

Die gestellte Aufgabe wird durch einen Antriebszug gelöst, der einen Schneckentrieb beinhaltet, bei dem ein Abtriebszapfen des Antriebsmotors als Schnecke ausgebildet ist oder auf diesen eine Schnecke drehfest aufgesetzt ist, und bei dem ferner die Schnecke mit einem Schneckenrad in Eingriff steht und das Schneckenrad eine weitere Schnecke dreht, die mit einem die Profilbohrung beinhaltenden Schneckenrad in Eingriff steht.

Eine derartige elektromotorische Möbelantriebsanordnung könnte auch als Doppelschneckentrieb bezeichnet werden, der in der konstruktiven Ausführung äußerst kompakt ist.

Da nunmehr die Möbelantriebsanordnung so ausgelegt ist, dass das Schneckenrad das Abtriebsglied ist, kann ein Schwenkwinkel von 360° in beiden Drehrichtungen erreicht werden, da das Schneckenrad voll drehfähig ist. Da das Schneckenrad die Profilbohrung aufweist, kann es direkt mit dem zu verschwenkenden Bauteil gekoppelt werden oder aber über entsprechende Verbindungselemente. Vorteilhaft ist jedoch, dass zur formschlüssigen Verbindung mit einem eingangsseitigen Bauteil, beispielsweise einem Zapfen einer mittels der Möbelantriebsanordnung zu verstellenden Einrichtung, das Schneckenrad mit der Profilbohrung versehen ist. Dadurch wird eine formschlüssige Verbindung erreicht, so dass auch im Laufe der Zeit keine Verschiebung des angeschlossenen Bauteils gegenüber dem Schneckenrad möglich ist. Bevorzugt ist die Profilbohrung in Form eines Vielkeiles oder eines Vielecks gestaltet. Bevorzugt kommt jedoch eine quadratische Bohrung in Frage. Diese Ausführung bietet den Vorteil, dass das Schneckenrad der Möbelantriebsanordnung auf einen entsprechend gestalteten Zapfen der zu verstellenden Einrichtung geschoben werden kann.

Die in Rede stehende Möbelantriebsanordnung sollte nicht nur kompakt und somit platzsparend aufgebaut sein, sondern auch kostengünstig herstellbar sein. Es ist deshalb vorgesehen, dass die mit dem die Profilbohrung aufweisenden Schneckenrad in Eingriff stehende Schnecke als Gewindespindel ausgebildet ist, wobei in bevorzugter Ausführung eine Trapezgewindespindel in Betracht kommt. Derartige Spindeln lassen sich handelsüblich beziehen, und sind demzufolge äußerst kostengünstig. Da die in Rede stehende Möbelantriebsanordnung nicht im Dauerbetrieb benutzt wird, ist eine solche Gestaltung der Schnecke und des Schneckenrades voll ausreichend.

Der Drehwinkel des Schneckenrades muss in den meisten Einsatzfällen begrenzt werden. Dieser Winkel richtet sich nach dem Verstellbereich der anzutreibenden Einrichtung. Es ist deshalb vorgesehen, dass der Drehwinkel des Schneckenrades durch zugeordnete Endschalter begrenzt ist. Diese Endschalter können auch einstellbar sein, so dass der Drehwinkel für den jeweiligen Einsatzfall eingestellt werden kann.

In einer besonders bevorzugten Ausführung ist vorgesehen, dass das Schneckenrad mit einer Steuerkurve gekoppelt ist, wobei diese so ausgelegt ist, dass der Endschalter oder die Endschalter funktionsgerecht betätigt werden können. Die Steuerkurve kann auch gegenüber dem Schneckenrad verdrehbar sein, so dass der Drehwinkel des Schneckenrades durch eine Verdrehung der Steuerkurve vergrößert oder verkleinert werden kann.

Es ist jedoch auch möglich, dass das Schneckenrad beispielsweise mit Zapfen versehen wird, die gegen feste Anschläge laufen, wodurch die Stärke des dem Motor zugeführten Stromes erhöht wird, so dass diese Erhöhung messbar ist, und durch ein entsprechendes Signal der Motor abgeschaltet wird.

Gemäß einer weiteren Ausführungsform ist vorgesehen, dass die Drehachse der mit dem abtriebsseitigen Schneckenrad in Eingriff stehenden Schnecke oder Spindel quer zum Abtriebszapfen des Antriebsmotors steht. Die Vorteile einer kompakten Bauweise bleiben auch bei dieser Ausführung erhalten, wobei auch der optimale Drehwinkel des Schneckenrades ausgenutzt werden kann. Diese Ausführung wird in der Länge gegenüber der erst genannten Ausführung reduziert, dafür jedoch etwas breiter. Die jeweilige Ausführungsform richtet sich nach den Einbauräumen.

Das Gehäuse ist vorzugsweise aus Kunststoff im Spritzgussverfahren hergestellt. Es können dann durch die entsprechende Auslegung des Werkzeuges die entsprechenden Möglichkeiten zur Verschraubung in einem Arbeitsgang hergestellt werden. Die Möbelantriebsanordnung wird beispielsweise über einen Handschalter gesteuert. Die Steuereinheit und gegebenenfalls auch weitere elektrische oder elektronische Bauteile sind innerhalb des Gehäuses integriert. In Abwandlung davon, könnte jedoch auch die Steuereinheit außen an das Gehäuse angesetzt werden. Ferner ist es möglich, dass die Steuereinheit an geeigneter Stelle im Objekt montiert wird.

In einer weiteren Ausführungsform ist vorgesehen, dass die Möbelantriebsanordnung frei von den Drehwinkeln des abtriebsseitigen Schneckenrades begrenzenden Endschaltern und Anschlägen ist, so dass das abtriebsseitige Schneckenrad uneingeschränkt verdrehbar ist, das heißt, es kann mehr als eine volle Umdrehung ausführen. Besonders vorteilhaft ist, wenn das Gehäuse der elektrischen Möbelantriebsanordnung zwei einander gegenüber sowie fluchtend zu der profilierten Bohrung des abtriebsseitigen Schneckenrades liegenden Öffnungen versehen ist, so dass wahlweise eine der Öffnungen einen mittels der Möbelantriebsanordnung zu verstellenden Mechanismus zugewandt liegt. Die Einbaulage der elektrischen Möbelantriebsanordnung ist dadurch wählbar. Zweckmäßigerweise ist am Gehäuse der Möbelantriebsanordnung eine Drehmomentstütze vorgesehen, damit im Betriebszustand die Möbelantriebsanordnung die Lage beibehält. Zweckmäßigerweise ist diese Drehmomentstütze eine mit einer Bohrung versehene Lasche, die an das Gehäuse angeformt ist und dem abtriebsseitigen Ende gegenüberliegt, da dadurch ein größtmöglicher Hebelarm gebildet ist. Da die Möbelantriebsanordnung in mehreren Einbaulagen betrieben werden kann, ist es zweckmäßig, wenn an dem Gehäuse zwei im Abstand angeordnete, jeweils mit einer Bohrung versehene Laschen angeformt sind. Dadurch wird sinngemäß ein Gabelkopf geschaffen.

Besonders vorteilhaft ist, wenn unabhängig von der sonstigen Gestaltung der Möbelantriebsanordnung der Antriebsmotor in mehrere, vorzugsweise in drei Halterungen formschlüssig festgelegt ist, da durch eine solche Auslegung zusätzliche Befestigungselemente entfallen. Diese Halterungen können in bevorzugter Ausführung jedoch aus Schrauben bestehen, die in entsprechende Ausnehmungen oder Taschen eingreifen. Es ist auch möglich, dass der Antriebsmotor an seinem dem Abtriebszapfen gegenüberliegenden Stirnende mit einem zentrischen Ansatz versehen ist, der in eine der Halterungen eingreift.

In anderer Ausführung ist es möglich, dass der Antriebsmotor vorzugsweise an der dem Abtriebszapfen zugewandten Seite durch Schrauben am Gehäuse der Möbelantriebsanordnung festgelegt ist, und dass die Schrauben aus einem geräuschdämpfenden Material, beispielsweise aus einem Kunststoff gefertigt sind, oder dass die Schrauben aus Metall gefertigt und dass zumindest die in Ausklinkungen eingreifenden Schraubenköpfe von einem Dämpfungsring aus einem nicht metallischen Werkstoff ganz oder teilweise umgeben sind. Jeder Dämpfungsring könnte beispielsweise aus Kunststoff oder Gummi bestehen. Sofern Gummi in Betracht zu ziehen ist, könnten die Dämpfungsringe einer Norm entsprechende O-Ringe sein. Die Verwendung von Schrauben aus einem Kunststoff oder die Verwendung von Dämpfungsringen mindert insgesamt die Geräuschentwicklung beim Betrieb der Möbelantriebsanordnung. Sofern der Antriebsmotor durch Halterungen innerhalb des Gehäuses festgelegt wird, könnte eine Ausführung in Betracht kommen, bei der vorzugsweise die der Antriebsseite des Antriebsmotors zugeordneten Halterungen derart in Versatz zueinander stehen, dass bei einer formschlüssigen Festlegung des Antriebsmotors Druck- und/oder Zugkräfte auf das Motorgehäuse einwirkbar sind. Sinngemäß wird dadurch der Antriebsmotor verspannt, so dass auch bei einer extrem langen Benutzung die Verbindung erhalten bleibt. Die Befestigung des Antriebsmotors am Gehäuse kann auch mittels eines Lagerschildes erfolgen, welches vorzugsweise an der dem Abtriebszapfen zugewandten Stirnseite montiert ist. Dieser Lagerschild weist zweckmäßigerweise mindestens zwei Befestigungsbohrungen auf, so dass eine Verschraubung mit dem Gehäuse möglich ist. Das Befestigungsschild kann in vorteilhafter Weise als Formteil ausgebildet sein, welches in den Randbereichen Zapfen aufweist oder dass der Randbereich insgesamt erhöht ist. Außerdem ist es möglich, dass die Drehachse des Antriebsmotors gegenüber einer Wandung des Gehäuses der Möbelantriebsanordnung schräg steht. Dadurch könnte beispielsweise ein günstiger Eingriffswinkel des auf den Abtriebszapfen festgesetzten Antriebsteiles mit einem weiteren Bauteil geschaffen werden.

Eine gegenüber den zuvor geschilderten Ausführungen noch kompakter ausgebildete Möbelantriebsanordnung ergibt sich, wenn das mit dem auf den Abtriebszapfen des Antriebsmotors aufgesetzte Schnecke in Eingriff stehende Schneckenrad eine weitere Schnecke antreibt, welche zentrisch zu diesem Schneckenrad angeordnet ist und mit dem die Profilbohrung aufweisenden Schneckenrad in Eingriff steht. Diese zentrisch stehende Schnecke wird dann mit der gleichen Drehzahl wie das Schneckenrad angetrieben, welches mit der auf den Abtriebszapfen des Antriebsmotors aufgesetzten Schnecke in Eingriff steht. Die auf den Abtriebszapfen des Antriebsmotors aufgesetzte Schnecke kann auch einstückig mit dem Abtriebszapfen ausgebildet sein, d.h. der Abtriebszapfen des Antriebsmotors ist als Schnecke ausgebildet. Bei dieser Ausführung steht zweckmäßigerweise die zentrische Schnecke in einer zentrischen Bohrung des Schneckenrades bzw. sie ist darin drehfest eingesetzt wobei es auch möglich ist, dass diese Schnecke und das zugehörige Schneckenrad, welches mit der Schnecke des Abtriebszapfens in Eingriff steht, ein einstückiges Formteil bilden. Es könnte beispielsweise aus einem Kunststoff im Spritzgießverfahren hergestellt werden. Die Möbelantriebsanordnung ist mit einer Steuerung und einer Spannungsversorgung, zum Beispiel mit einem Trafo ausgestattet. Das Gehäuse der Möbelantriebsanordnung kann so ausgelegt werden, dass die Steuerung und/oder auch die Spannungsversorgung im Gehäuse untergebracht werden. Der Drehwinkel des die Profilbohrung aufweisenden Schneckenrades kann nicht nur durch Endschalter oder Anschläge begrenzt werden, sondern auch über ein geeignetes Wegerfassungssystem. Der Drehwinkel kann dann eingestellt und im Bedarfsfalle auch verändert werden. Ein solches Wegeerfassungssystem könnte durch so genannte Hall-Sensoren gebildet werden, die im Motor angeordnet sind. Die Steuerung muss dem entsprechend ausgelegt sein. Unabhängig von der Ausführung der Möbelantriebsanordnung lässt sich diese in einfachster Weise montieren, da beispielsweise nach dem Aufstecken der Antriebseinheit auf eine Welle der zu verstellenden Verstelleinrichtung die Möbelantriebsanordnung beispielsweise mit nur einer Schraube gesichert werden muss. Diese Schraube bildet dann die Drehmomentstütze. Die elektromotorische Anordnung ist selbsthemmend. Dies wird immer dadurch erreicht, dass der abtriebsseitigen Getriebestufe immer ein weiteres Getriebe, zum Beispiel ein Schneckenradgetriebe vorgeschaltet ist. Die beschriebenen Möbelantriebsanordnungen sind so ausgelegt, dass ein relativ hohes Drehmoment übertragen wird. Dies ergibt sich aus der hohen Motordrehzahl und der geringen Drehzahl des abtriebsseitigen Schneckenrades. Die beschriebene Möbelantriebsanordnung ist deshalb besonders für Möbel, vorzugsweise für Sessel geeignet da die notwendigen Drehmomente bzw. Kräfte aufgebracht werden können.

Die in Frage kommende Möbelantriebsanordnung ist nicht nur äußerst kompakt, sondern zur Erfüllung der Funktion wird ein Minimum an Bauteilen benötigt. Ferner lässt sich die Anordnung einfach und schnell montieren. Weiterhin ist besonders vorteilhaft, dass die Möbelantriebsanordnung auch als Nachrüstsatz für in Betrieb genommene Objekte verwendbar ist.

Anhand der beiliegenden Zeichnung wird die Erfindung noch näher erläutert. Es zeigen:
- Figur 1: eine erste Ausführungsform der elektromotorischen Möbelantriebsanordnung in einer Ansicht;
- Figur 2: eine weitere Ausführungsform der elektromotorischen Möbelantriebsanordnung in einer perspektivischen Darstellung, und
- Figur 3: eine weitere Ausführungsform der elektromotorischen Möbelantriebsanordnung.

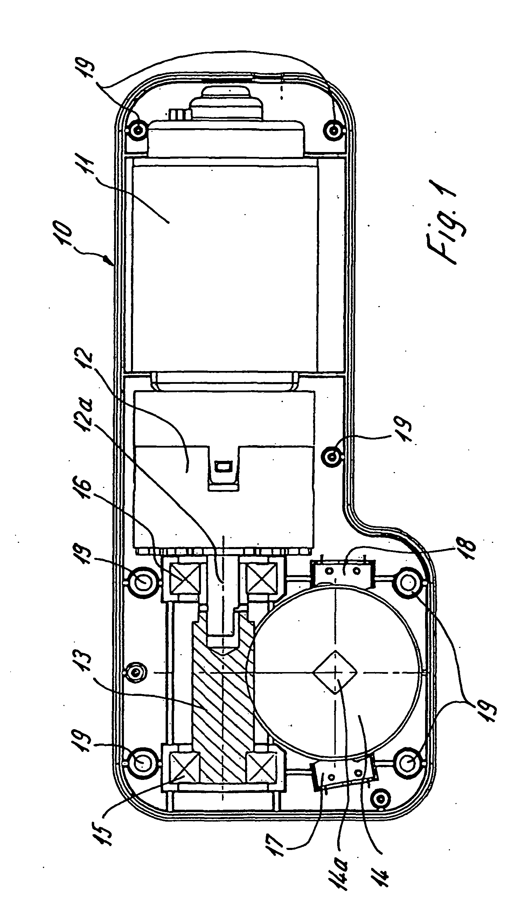

Die in der Figur 1 dargestellte elektromotorische Antriebseinheit 10 fällt nicht in den Schutzbereich des Anspruches 1 und ist mit einem Gehäuse ausgestattet, welches aus zwei Gehäusehälften oder aus zwei Gehäuseschalen besteht, die miteinander verbunden sind, beispielsweise durch Schrauben. Ein nicht näher erläuterter Gleichstrommotor 11 treibt ein nicht näher erläutertes Umlaufgetriebe 12 an. Der Abtriebszapfen 12a des Umlaufgetriebes 12 steht fluchtend zum Abtriebszapfen des Antriebsmotors 11. Im dargestellten Ausführungsbeispiel sind die Durchmesser des Antriebsmotors 11 und des Umlaufgetriebes 12 annähernd gleich, so dass das Gehäuse im zugeordneten Bereich rohrförmig gestaltet ist. Der Abtriebszapfen 12a des Umlaufgetriebes 12 ist mit einer Schnecke 13 drehfest verbunden. Gemäß der Darstellung nach der Figur 1 ist eine Gehäusehälfte bzw. eine Gehäuseschale entfernt worden, um die Funktionsteile der elektromotorischen Möbelantriebsanordnung Schnecke 13 drehfest verbunden. Die Schnecke 13 kann in nicht näher dargestellter Weise ein Abschnitt einer Trapezgewindespindel sein. Die Schnecke 13 steht mit einem Schneckenrad 14 in Eingriff wodurch die Drehzahl des Schneckenrades 14 gegenüber der Drehzahl des Abtriebszapfens 12a des Umlaufbetriebes 12 nochmals deutlich herabgesetzt wird. Das Schneckenrad 14 bildet das Abtriebsglied der elektromotorischen Möbelantriebsanordnung 10. Zur antriebstechnischen Verbindung mit dem Eingangsglied einer nicht dargestellten Verstelleinrichtung ist das Schneckenrad 14 mit einer profilierten Bohrung 14a versehen, die zentrisch angeordnet ist und im dargestellten Ausführungsbeispiel einen quadratischen Querschnitt hat. Andere Querschnittsformen sind denkbar, wobei wesentlich ist, dass eine formschlüssige Verbindung mit dem Eingangsglied einer Verstelleinrichtung erzielt wird. So könnte die Bohrung auch als Vielkeil gestaltet sein. Die Schnecke 13 ist mit den Endbereichen in Wälzlagern 15, 16 gelagert. Die Lagerungen für das Schneckenrad 14 sind aus Darstellungsgründen nicht gezeichnet. In nicht dargestellter Weise kann auch die Steuereinheit in dem Gehäuse der elektromotorischen Möbelantriebsanordnung integriert werden. Das Gehäuse ist in bevorzugter Ausführung aus Kunststoff im Spritzgussverfahren hergestellt, wobei jedoch auch die Möglichkeit besteht, ein metallisches Gehäuse, beispielsweise aus Aluminium oder einem ähnlichen Material zu verwenden. Innerhalb des Gehäuses sind noch zwei Endschalter 17, 18 montiert, die funktionell dem Schneckenrad 14 zugeordnet sind, um den Drehwinkel des Schneckenrades 14 zu begrenzen. An der Innenseite sind an der Gehäusehälfte innenseitig Augen 19 angeformt, die mit einem Gewinde versehen sein können, um die beiden Gehäusehälften miteinander zu verschrauben.

Die Ansteuerung des Gleichstrommotors 11 kann über einen Handschalter und eine Kabelverbindung erfolgen, es kann jedoch auch eine drahtlose Übermittlung der Signale erfolgen. Außerdem könnte die Steuerung über eine entsprechend ausgelegte Sprachsteuerung erfolgen.

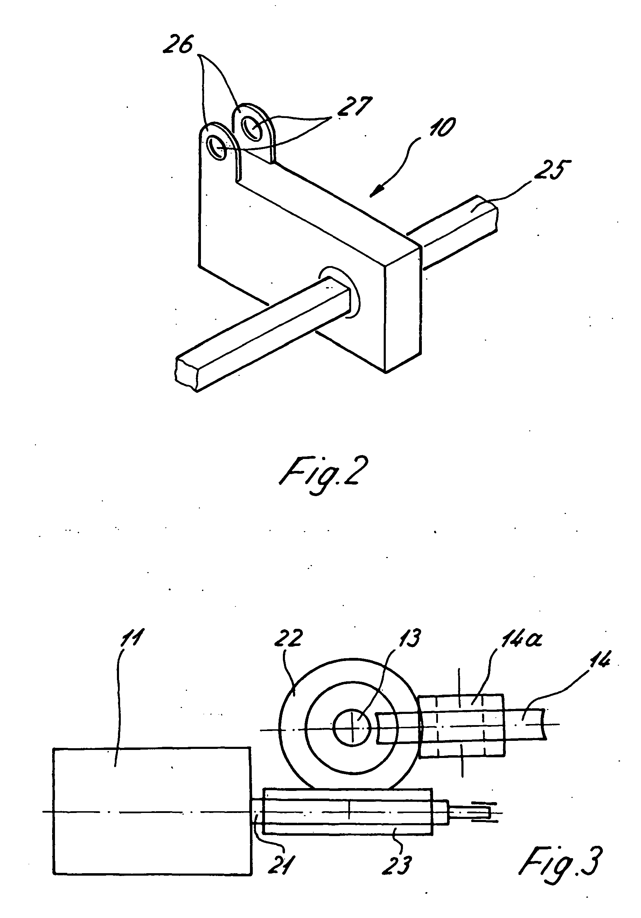

Die Figur 2 zeigt eine weitere Auskhrungsform, bei der insbesondere das Gehäuse der elektromotorischen Möbelantriebsanordnung 10 gegenüber der Ausführung nach der Figur 1 geändert ist. Die Antriebselemente können in einer Konfigurationen gemäß der Figur 3 angeordnet sein. Die Figur 2 soll verdeutlichen, dass das Gehäuse der Möbelantriebsanordnung an zwei einander gegenüberliegenden Seiten mit Öffnungen versehen ist, die fluchtend zu der Profilbohrung 14a des abtriebsseitigen Schneckenrades 14 verlaufen. Die Verbindung zu dem Eingangsglied einer nicht dargestellten Verstellanordnung kann beispielsweise durch eine Profilstange 25 erfolgen, die schließend in die Profilbohrung 14a des abtriebsseitigen Schneckenrades eingesetzt ist. Am gegenüberliegenden Endbereich ist das Gehäuse der Möbelantriebsanordnung mit einer Drehmomentstütze ausgestattet, die aus an das Gehäuse angeformten, sinngemäß einen Gabelkopf bildenden Laschen 26 besteht. Die Laschen 26 sind jeweils mit einer Bohrung 27 ausgestattet. Die Figur 2 zeigt, dass die mittels der Möbelantriebsanordnung zu verstellende Verstellanordnung wahlweise an der einen oder der anderen Seite der Möbelantriebsanordnung 10 liegen kann. Außerdem besteht durch die zwei fluchtenden Öffnungen des Gehäuses die Möglichkeit, dass ebenfalls wahlweise die Möbelantriebsanordnung in der gezeichneten oder in einer gedrehten oder spiegelbildlichen Anordnung montiert werden kann. Die jeweilige Einbaulage richtet sich nach den vorhandenen Einbauräumen und der Auslegung der Verstelleinrichtung.

Die Figur 3 zeigt eine äußerst kompakte Bauweise. Auch bei dieser Ausführung ist auf den Abtriebszapfen 21 des Antriebsmotors 11 eine Schnecke 23 drehfest aufgesetzt. Im Gegensatz zu der gezeichneten Ausführung kann der Abtriebszapfen 21 auch als Schnecke ausgebildet sein. Diese Schnecke 23 steht mit einem Schneckenrad 22 in Eingriff, dessen Drehachse versetzt sowie rechtwinklig zur Drehachse des Abtriebszapfens 21 steht. Dieses Schneckenrad treibt die weitere Schnecke 13, die zentrisch zum Schneckenrad 22 steht. Diese Schnecke 13 kann beispielsweise drehfest in eine zentrische Bohrung des Schneckenrades 22 eingesetzt sein. Es ist auch möglich, dass das Schneckenrad 22 und die Schnecke 13 ein einstückiges Formteil bilden. Die Schnecke 13 steht mit dem die Profilbohrung 14a beinhaltenden Schneckenrad 14 in Eingriff. Die Drehachse des abtriebsseitigen Schneckenrades 14 ist gegenüber dem Abtriebszapfen 21 des Antriebsmotors 11 versetzt und steht senkrecht dazu. Aus der Figur 3 ergibt sich schon, dass diese Möbelantriebsanordnung in der konstruktiven Ausführung äußerst kompakt ist.

Die Erfindung ist nicht auf die dargestellten Ausführungsbeispiele beschränkt. Wesentlich ist, dass zur Erhöhung des Drehwinkels eines mit der Möbelantriebsanordnung zu verstellenden Bauteiles über 90° Grad hinaus das Schneckenrad 14 das Abtriebsglied der elektromotorischen Möbelantriebsanordnung 10 bildet.

## Patentansprüche

1. Elektromotorische Möbelantriebsanordnung (10) mit
a) einem Gehäuse, welches aus zwei Gehäusehälften oder aus zwei Gehäuseschalen besteht,
b) einem Antriebsmotor und
c) einem Antriebszug mit einer Profilbohrung (14a) für ein drehfähiges Eingangsglied einer Verstelleinrichtung,
**gekennzeichnet durch**
d) einen Antriebszug, der einen Schneckentrieb beinhaltet,
e) wobei ein Abtriebszapfen (21) des Antriebsmotors (11) als Schnecke ausgebildet oder auf diesen eine Schnecke (23) drehfest aufgesetzt ist und
f) wobei ferner die Schnecke (23) mit einem Schneckenrad (22) in Eingriff steht und das Scheckenrad (22) eine weitere Schnecke (13) dreht, die mit einem die Profilbohrung (14a) beinhaltenden Schneckentrieb (14) in Eingriff steht.

2. Elektromotorische Möbelantriebsanordnung nach Anspruch 1, **dadurch gekennzeichnet, dass** die mit dem Schneckenrad (14) in Eingriff stehende Schnecke (13) als Gewindespindel, vorzugsweise als Trapezgewindespindel ausgebildet ist.

3. Elektromotorische Möbelantriebsanordnung nach Anspruch 1, **dadurch gekennzeichnet, dass** der Drehwinkel des Schneckenrades (14) durch einen oder mehrere Endschalter (17, 18) begrenzt ist.

4. Elektromotorische Möbelantriebsanordnung nach Anspruch 3, **dadurch gekennzeichnet, dass** der Endschalter (17, 18) bzw. die Endschalter (17, 18) durch eine mit dem abtriebsseitigen Schneckenrad (14) gekoppelte Steuerkurve betätigbar sind, die vorzugsweise gegenüber dem abtriebsseitigen Schneckenrad (14) verdrehbar ist oder mit dem Schneckenrad (14) ein einstückiges Formteil bildet.

5. Elektromotorische Möbelantriebsanordnung nach Anspruch 1, **dadurch gekennzeichnet, dass** zur Begrenzung des Drehwinkels des Schneckenrades (14) ortsfeste Anschläge vorgesehen sind, gegen die entsprechend gestaltete Gegenstücke des Schneckenrades (14) auflaufen.

6. Elektromotorische Möbelantriebsanordnung nach Anspruch 1, **dadurch gekennzeichnet, dass** die Drehachse der mit dem abtriebsseitigen Schneckenrad (14) in Eingriff stehenden Schnecke (13) oder der Gewindespindel quer zum Abtriebszapfen (21) des Antriebsmotors (11) steht.

7. Elektromotorische Möbelantriebsanordnung nach einem oder mehreren der vorhergehenden Ansprüche 1, **dadurch gekennzeichnet, dass** innerhalb des Gehäuses Anschlussmöglichkeiten für Bedienelemente, die Steuereinheit und/oder elektrische oder elektronischen Bauteile angeordnet sind.

8. Elektromotorische Möbelantriebsanordnung nach einem oder mehreren der vorhergehenden Ansprüche 1 bis 7, **dadurch gekennzeichnet, dass** die Möbelantriebsanordnung (10) frei von den Drehwinkeln des abtriebsseitigen Schneckenrades begrenzenden Endschaltern oder Anschlägen ist, so dass das abtriebsseitige Schneckenrad (14) mehr als eine Umdrehung verdrehbar ist.

9. Elektromotorische Möbelantriebsanordnung nach einem oder mehreren der vorhergehenden Ansprüche 1 bis 8, **dadurch gekennzeichnet, dass** das Gehäuse der elektromotorischen Möbelantriebsanordnung mit zwei einander gegenüber sowie fluchtend zu der profilierten Bohrung (14) des abtriebsseitigen Schneckenrades (14) liegenden Öffnung versehen ist, so dass wahlweise eine der Öffnungen einer zu verstellenden Verstelleinheit zugewandt liegt.

10. Elektromotorische Möbelantriebsanordnung nach einem oder mehreren der vorhergehenden Ansprüche 1 bis 9, **dadurch gekennzeichnet, dass** der Antriebsmotor (11) in mehrere, vorzugsweise drei Halterungen formschlüssig festgelegt ist, und dass vorzugsweise die Halterungen aus Schrauben gebildet sind.

11. Elektromotorische Möbelantriebsanordnung nach einem oder mehreren der vorhergehenden Ansprüche 1 bis 10, **dadurch gekennzeichnet, dass** der Antriebsmotor (11) an der seinem Abtriebszapfen (21) gegenüberliegenden Stirnseite einen zentrischen Ansatz aufweist, der in eine der Halterungen oder in mehrere Halterungen eingreift.

12. Elektromotorische Möbelantriebsanordnung nach einem oder mehreren der vorhergehenden Ansprüche 1 bis 11, **dadurch gekennzeichnet, dass** der Antriebsmotor (11) vorzugsweise an der dem Abtriebszapfen (21) zugewandten Seite durch Schrauben am Gehäuse der Möbelantriebsanordnung (10) festgelegt ist und dass die Schrauben aus einem geräuschdämpfenden Material, beispielsweise aus einem Kunststoff gefertigt sind, oder dass die Schrauben aus Metall gefertigt und dass zumindest die in Aussenkungen eingreifenden Schraubenköpfe von einem Dämpfungsring aus einem nichtmetallischen Werkstoff ganz oder teilweise umgeben sind.

13. Elektromotorische Möbelantriebsanordnung nach einem oder mehreren der vorhergehenden Ansprüche 1 bis 12, **dadurch gekennzeichnet, dass** vorzugsweise die der Abtriebsseite des Antriebsmotors (11) zugeordneten Halterungen derart in einem Versatz zueinander stehen, dass bei der formschlüssigen Festlegung des Antriebsmotors (11) Druck- und/oder Zugkräfte auf das Motorgehäuse einwirkbar sind.

14. Elektromotorische Möbelantriebsanordnung nach einem oder mehreren der vorhergehenden Ansprüche 1 bis 13, **dadurch gekennzeichnet, dass** der Antriebsmotor (11) vorzugsweise an der dem Abtriebszapfen (21) zugeordneten Stirnseite mit einem zentrischen Lagerschild ausgestattet ist, welches Befestigungsbohrungen aufweist, und dass das Lagerschild vorzugsweise ein Formteil ist.

15. Elektromotorische Möbelantriebsanordnung nach einem oder mehreren der vorhergehenden Ansprüche 1 bis 14, **dadurch gekennzeichnet, dass** das Gehäuse der Möbelantriebsanordnung (10) mit einer Drehmomentstütze ausgestattet ist, die vorzugsweise aus wenigstens einer Lasche (26) gebildet ist, die mit einer Bohrung (27) ausgestattet ist.

16. Elektromotorische Möbelantriebsanordnung nach einem oder mehreren der vorhergehenden Ansprüche 1 bis 15, **dadurch gekennzeichnet, dass** das mit dem auf den Abtriebszapfen (21) des Antriebsmotors (11) aufgesetzte Schnecke (23) in Eingriff stehende Schneckenrad (22) eine Schnecke (13) antreibt, die zentrisch zu diesem Schneckenrad (22) angeordnet ist, und mit dem die Profilbohrung (14a) aufweisenden, abtriebsseitigen Schneckenrad (14) in Eingriff steht.

17. Elektromotorische Möbelantriebsanordnung nach Anspruch 16, **dadurch gekennzeichnet, dass** die Schnecke (13) in eine zentrische Bohrung des Schneckenrades drehfest eingesetzt ist, oder dass die Schnecke (13) und das Schneckenrad (22) ein einstückiges Formteil bilden.

18. Elektromotorische Möbelantriebsanordnung nach einem oder mehreren der vorhergehenden Ansprüche 1 bis 17, **dadurch gekennzeichnet, dass** die Steuereinheit und/oder der Spannungsversorger im Gehäuse der elektromotorischen Möbelantriebsanordnung (10) angeordnet sind.

19. Elektromotorische Möbelantriebsanordnung nach einem oder mehreren der vorhergehenden Ansprüche 1 bis 18, **dadurch gekennzeichnet, dass** der Drehwinkel des abtriebsseitigen Schneckenrades (14) durch ein Wegeerfassungssystem einstell- und veränderbar ist, und dass dieses Wegeerfassungssystem vorzugsweise Hall-Sensoren aufweist, die im Antriebsmotor 11 installiert sind.

20. Elektromotorische Möbelantriebsanordnung nach einem oder mehreren der vorhergehenden Ansprüche 1 bis 19, **dadurch gekennzeichnet, dass** die Möbelantriebsanordnung (10) selbsthemmend ist.

## Claims

1. Electromotive furniture drive arrangement (10) having
a) a housing which comprises two housing halves or two housing shells,
b) a drive motor, and
c) a drive train with a profiled hole (14a) for a rotatable input element of an adjusting device,
**characterized by**
d) a drive train which contains a worm drive,
e) with an output journal (21) of the drive motor (11) being in the form of a worm, or a worm (23) being fitted on this output journal such that they rotate together, and
f) furthermore with the worm (23) engaging with a worm gear (22), and the worm gear (22) turning a further worm (13) which engages with a worm drive (14) which contains the profiled hole (14a).

2. Electromotive furniture drive arrangement according to Claim 1, **characterized in that** the worm (13) which engages with the worm gear (14) is in the form of a threaded spindle, preferably a trapezoidal threaded spindle.

3. Electromotive furniture drive arrangement according to Claim 1, **characterized in that** the angle of rotation of the worm gear (14) is limited by one or more limit switches (17, 18).

4. Electromotive furniture drive arrangement according to Claim 3, **characterized in that** the limit switch (17, 18) or the limit switches (17, 18) can be operated by a control cam which is coupled to the output-end worm gear (14) and can preferably be rotated with respect to the output-end worm gear (14) or forms an integral shaped part with the worm gear (14).

5. Electromotive furniture drive arrangement according to Claim 1, **characterized in that** stationary stops are provided for the purpose of limiting the angle of rotation of the worm gear (14), and correspondingly shaped mating pieces of the worm gear (14) run against the said stops.

6. Electromotive furniture drive arrangement according to Claim 1, **characterized in that** the axis of rotation of the worm (13) which engages with the output-end worm gear (14) or of the threaded spindle is transverse to the output journal (21) of the drive motor (11).

7. Electromotive furniture drive arrangement according to one or more of the preceding Claims 1 to 6, **characterized in that** connection options for the operator control elements, the control unit and/or the electrical or electronic components are arranged within the housing.

8. Electromotive furniture drive arrangement according to one or more of the preceding Claims 1 to 7, **characterized in that** the furniture drive arrangement (10) does not have limit switches or stops which limit the angles of rotation of the output-end worm gear, with the result that the output-end worm gear (14) can be rotated by more than one revolution.

9. Electromotive furniture drive arrangement according to one or more of the preceding Claims 1 to 8, **characterized in that** the housing of the electromotive furniture drive arrangement is provided with two openings which are opposite one another and aligned with the profiled hole (14a) in the output-end worm gear (14), with the result that one of the openings optionally faces an adjusting unit which can make adjustments.

10. Electromotive furniture drive arrangement according to one or more of the preceding Claims 1 to 9, **characterized in that** the drive motor (11) is secured in a plurality of, preferably three, holders in an interlocking manner, and **in that** the holders are preferably formed from screws.

11. Electromotive furniture drive arrangement according to one or more of the preceding Claims 1 to 10, **characterized in that** the drive motor (11) has a central projection at the end face which is opposite its output journal (21), the said projection engaging in one of the holders or in a plurality of holders.

12. Electromotive furniture drive arrangement according to one or more of the preceding Claims 1 to 11, **characterized in that** the drive motor (11) is secured by screws to the housing of the furniture drive arrangement (10), preferably at the end which faces the output journal (21), and **in that** the screws are produced from a noise-damping material, for example from a plastic, or **in that** the screws are produced from metal, and **in that** at least the screw heads which engage in the recesses are completely or partially surrounded by a damping ring made of a non-metallic material.

13. Electromotive furniture drive arrangement according to one or more of the preceding Claims 1 to 12, **characterized in that** the holders which are associated with the output end of the drive motor (11) are preferably offset with respect to one another in such a way that compression and/or tensile forces may act on the motor housing when the drive motor (11) is secured in an interlocking manner.

14. Electromotive furniture drive arrangement according to one or more of the preceding Claims 1 to 13, **characterized in that** the drive motor (11) is preferably equipped with a central end plate at the end face which is associated with the output journal (21), the said end plate having fastening holes, and **in that** the end plate is preferably in the form of a shaped part.

15. Electromotive furniture drive arrangement according to one or more of the preceding Claims 1 to 14, **characterized in that** the housing of the furniture drive arrangement (10) is equipped with a torque support which is preferably formed from at least one lug (26) which is equipped with a hole (27).

16. Electromotive furniture drive arrangement according to one or more of the preceding Claims 1 to 15, **characterized in that** the worm gear (22) which engages with the worm (23) which is fitted on the output journal (21) of the drive motor (11) drives a worm (13) which is arranged centrally with respect to this worm gear (22) and engages with the output-end worm gear (14) which has the profiled hole (14a).

17. Electromotive furniture drive arrangement according to Claim 16, **characterized in that** the worm (13) is inserted in a central hole in the worm gear such that it cannot rotate, or **in that** the worm (13) and the worm gear (22) form an integral shaped part.

18. Electromotive furniture drive arrangement according to one or more of the preceding Claims 1 to 17, **characterized in that** the control unit and/or the voltage supply means are arranged in the housing of the electromotive furniture drive arrangement (10).

19. Electromotive furniture drive arrangement according to one or more of the preceding Claims 1 to 18, **characterized in that** the angle of rotation of the output-end worm gear (14) can be set and changed by a route detection system, and **in that** this route detection system preferably has Hall sensors which are installed in the drive motor (11).

20. Electromotive furniture drive arrangement according to one or more of the preceding claims 1 to 19, **characterized in that** the furniture drive arrangement (10) is self-locking.

## Revendications

1. Dispositif d'entraînement de meuble (10) commandé par moteur électrique avec
a) un boîtier qui est constitué de deux moitiés de boîtier ou de deux coquilles de boîtier,
b) un moteur de commande et
c) un dispositif de traction avec un alésage profilé (14a) pour un élément d'entrée rotatif d'un dispositif de réglage,
**caractérisé par**
d) un dispositif de traction qui renferme un engrenage à vis sans fin,
e) un tourillon de sortie (21) du moteur de commande (11) étant configuré comme une vis sans fin ou une vis sans fin (23) étant en prise de manière solidaire en rotation avec celui-ci, et
f) la vis sans fin (23) étant en outre en prise avec une roue hélicoïdale (22) et la roue hélicoïdale (22) faisant tourner une autre vis sans fin (13) qui est en prise avec un engrenage à vis sans fin (14) renfermant l'alésage profilé (14a).

2. Dispositif d'entraînement de meuble commandé par moteur électrique selon la revendication 1, **caractérisé en ce que** la vis sans fin (13) en prise avec la roue hélicoïdale (14) est configurée comme une tige filetée, de préférence comme une tige filetée trapézoïdale.

3. Dispositif d'entraînement de meuble commandé par moteur électrique selon la revendication 1, **caractérisé en ce que** l'angle de rotation de la roue hélicoïdale (14) est limitée par un ou plusieurs commutateurs de fin de course (17, 18).

4. Dispositif d'entraînement de meuble commandé par moteur électrique selon la revendication 3, **caractérisé en ce que** le commutateur de fin de course (17, 18) ou les commutateurs de fin de course (17, 18) peut être actionné ou peuvent être actionnés par une came de commande couplée à la roue hélicoïdale du côté de sortie (14) qui est, de préférence, rotative par rapport à la roue hélicoïdale du côté de sortie (14) ou qui forme un élément moulé en une seule partie avec la roue hélicoïdale (14).

5. Dispositif d'entraînement de meuble commandé par moteur électrique selon la revendication 1, **caractérisé en ce que**, pour limiter l'angle de rotation de la roue hélicoïdale (14), il est prévu des butées fixes contre lesquelles butent les pendants de la roue hélicoïdale (14) configurés de manière appropriée.

6. Dispositif d'entraînement de meuble commandé par moteur électrique selon la revendication 1, **caractérisé en ce que** l'axe de rotation de la vis sans fin (13) en prise avec la roue hélicoïdale du côté de sortie (14) ou la tige filetée est perpendiculaire au tourillon de sortie (21) du moteur de commande (11).

7. Dispositif d'entraînement de meuble commandé par moteur électrique selon une ou plusieurs des revendications précédentes 1, **caractérisé en ce que** des possibilités de raccordement pour des éléments de réglage, pour l'unité de commande et/ou pour des composants électriques ou électroniques sont disposées à l'intérieur du boîtier.

8. Dispositif d'entraînement de meuble commandé par moteur électrique selon une ou plusieurs des revendications précédentes 1 à 7, **caractérisé en ce que** le dispositif d'entraînement de meuble (10) est exempt des commutateurs de fin de course ou des butées limitant l'angle de rotation de la roue hélicoïdale du côté de sortie (14), de sorte que la roue hélicoïdale du côté de sortie (14) peut effectuer plus d'une rotation.

9. Dispositif d'entraînement de meuble commandé par moteur électrique selon une ou plusieurs des revendications précédentes 1 à 8, **caractérisé en ce que** le boîtier du dispositif d'entraînement de meuble est muni deux ouvertures opposées l'une à l'autre et positionnées en alignement sur l'alésage profilé (14) de la roue hélicoïdale du côté de sortie (14), de sorte que l'une des ouvertures est orientée, au choix, vers une unité de réglage à régler.

10. Dispositif d'entraînement de meuble commandé par moteur électrique selon une ou plusieurs des revendications précédentes 1 à 9, **caractérisé en ce que** le moteur de commande (11) est fixé par fermeture géométrique dans plusieurs, de préférence trois, supports et **en ce que** les supports sont, de préférence, formés par des vis.

11. Dispositif d'entraînement de meuble commandé par moteur électrique selon une ou plusieurs des revendications précédentes 1 à 10, **caractérisé en ce que**, sur la face frontale opposée à son tourillon de sortie (21), le moteur de commande (11) comporte un épaulement central qui vient en prise dans l'un des supports ou dans plusieurs supports.

12. Dispositif d'entraînement de meuble commandé par moteur électrique selon une ou plusieurs des revendications précédentes 1 à 11, **caractérisé en ce que**, de préférence sur le côté dirigé vers le tourillon de sortie (21), le moteur de commande (11) est fixé par des vis au boîtier du dispositif d'entraînement de meuble (10) et **en ce que** les vis sont faites en un matiériau amortissant les bruits, par exemple en matière synthétique, ou **en ce que** les vis sont faites en métal et **en ce qu'**au moins les têtes de vis s'engrenant dans des logements sont entourées complètement ou partiellement par une bague d'amortissement faite en une matière non métallique.

13. Dispositif d'entraînement de meuble commandé par moteur électrique selon une ou plusieurs des revendications précédentes 1 à 12, **caractérisé en ce que**, de préférence les supports associés au côté de sortie du moteur de commande (11) sont décalés les uns par rapport aux autres de telle manière que, lors de la fixation du moteur de commande (11) par fermeture géométrique, des forces de pression et/ou de traction peuvent être exercées sur le carter du moteur.

14. Dispositif d'entraînement de meuble commandé par moteur électrique selon une ou plusieurs des revendications précédentes 1 à 13, **caractérisé en ce que**, de préférence sur la face frontale associée au tourillon de sortie (21), le moteur de commande (11) est équipé d'un flasque central qui comporte des alésages de fixation et **en ce que** le flasque est, de préférence, un élément moulé.

15. Dispositif d'entraînement de meuble commandé par moteur électrique selon une ou plusieurs des revendications précédentes 1 à 14, **caractérisé en ce que** le boîtier du dispositif d'entraînement de meuble (10) est équipé d'un appui de couple de rotation qui est constitué, de préférence, d'au moins une éclisse (26) munie d'un alésage (27).

16. Dispositif d'entraînement de meuble commandé par moteur électrique selon une ou plusieurs des revendications précédentes 1 à 15, **caractérisé en ce que** la roue hélicoïdale (22) en prise avec la vis sans fin (23) en prise avec le tourillon de sortie (21) du moteur de commande (11) entraîne une vis sans fin (13) qui est positionnée au centre par rapport à cette roue hélicoïdale (22) et qui en prise avec la roue hélicoïdale (14) du côté de sortie comportant l'alésage profilé (14a).

17. Dispositif d'entraînement de meuble commandé par moteur électrique selon la revendication 16, **caractérisé en ce que** la vis sans fin (13) est positionnée dans un alésage central de la roue hélicoïdale (22) de manière solidaire en rotation ou **en ce que** la vis sans fin (13) et la roue hélicoïdale (22) constituent un élément moulé en une seule pièce.

18. Dispositif d'entraînement de meuble commandé par moteur électrique selon une ou plusieurs des revendications précédentes 1 à 17, **caractérisé en ce que** l'unité de commande et/ou l'alimentation de tension sont disposées dans le boîtier du dispositif d'entraînement de meuble (10).

19. Dispositif d'entraînement de meuble commandé par moteur électrique selon une ou plusieurs des revendications précédentes 1 à 18, **caractérisé en ce que** l'angle de rotation de la roue hélicoïdale (14) du côté de sortie peut être réglé et modifié à l'aide d'un système de détection de déplacement et **en ce que** ce que le système de détection de déplacement comporte, de préférence, des détecteurs de Hall qui sont installés dans le moteur de commande (11).

20. Dispositif d'entraînement de meuble commandé par moteur électrique selon une ou plusieurs des revendications précédentes 1 à 19, **caractérisé en ce que** le dispositif d'entraînement de meuble (10) est autobloquant.
